# EUROPEAN PATENT SPECIFICATION

(11) **EP 3 976 519 B1**
(45) Date of publication and mention of the grant of the patent: **03.05.2023**
(21) Application number: 20721589.8
(22) Date of filing: 27.04.2020
(51) Int. Cl.: B66B 5/00, G06V 20/52, G06V 40/10, G06T 7/73

(54) **PASSENGER DETECTION SYSTEM FOR PASSENGER MOVING SYSTEMS**
INSASSENERFASSUNGSSYSTEM FÜR INSASSENBEWEGUNGSSYSTEM
SYSTÈME DE DÉTECTION DE PASSAGER POUR SYSTÈMES DE TRANSPORT DE PASSAGERS

(30) Priority: 03.06.2019 EP 19382450; 04.07.2019 DE 102019209847
(43) Date of publication of application: 06.04.2022
(73) Proprietor: TK Escalator Norte, S.A., 33682 Mieres (ES)
(72) Inventor: MENDIOLAGOITIA JULIANA, José, 33203 Gijón (ES); GONZALEZ MIERES, Isabel, 33204 Gijón (ES); ÁLVAREZ CUERVO, Adrián, 33402 Avilés (ES); PÉREZ PÉREZ, Marcos, 33012 Oviedo (ES); SESMA SANCHEZ, Francisco Javier, 33204 Gijón (ES)
(74) Representative: Michalski Hüttermann & Partner Patentanwälte mbB
(86) International application number: PCT/EP2020/061635
(87) International publication number: WO 2020/244846

(56) References cited:
- US-A1- 2004 022 439
- US-A1- 2015 092 998

## Description

The invention refers to a safety system for a passenger moving system comprising a monitoring means which is adapted to identify a body profile of a passenger.

Safety devices designed to detect whether a passenger of a passenger moving system is a wheel chair user or a child in a pram are known in the art. Such devices are useful and important for ensuring passenger safety since very often passengers with wheelchairs or prams require more time when using a passenger moving system, for example when entering and exiting an elevator.

JP 2012176833 discloses a wheelchair detection device and a bicycle detection device wherein the detection device generates an image of the object when it is passing between the doors of an elevator. The device operates by detecting the presence of a circular figure in a captured image, wherein the circular figure corresponds to a wheel.

JP 2016050088 discloses a wheelchair elevator with a wheelchair user detection device. The detection device is adapted to detect the amount of load applied to a wheelchair user detection area in the vicinity of the wheelchair user dedicated car operation panel. When the car arrives at the destination floor due to the call operation performed on the wheelchair user dedicated car operation panel, the control device loads the wheelchair user load amount detected by the wheelchair user detection device. If the amount is within a specific range, it is determined that the wheelchair user is in the car and a control is made to open the car door of the car on the destination floor for a longer period of time.

Both systems, however, require the passenger to be either in the process of entering the passenger moving system or be already present in the passenger moving system before they are able to perform a detection operation. Neither system provides a way of determining the passenger status before they enter a passenger moving system, nor a way of determining whether a passenger is in a sitting or standing position.

US 2004/022439 A1 discloses a method and system for discriminating between an ambulatory person and a wheelchair user, e.g. for an elevator, including multiple cameras. From the camera pictures, a body profile is determined by edge detection methods, wherein said discrimination is derived from the body profile by analyzing e.g. height, shape or oscillatory foot motion.

US 2015/092998 A1 discloses a posture detection method for medical purposes, wherein skeleton data is obtained e.g. by depth image capturing. The method includes determining calculating joint angles.

It is thus an object of the invention, to provide a safety system which, rather than detecting an object such as a wheelchair, is adapted to detect a person/passenger, in particular it is adapted to detect whether a passenger is in a sitting position or a standing position preferably before they enter a passenger moving system. Furthermore it is an object of the invention to provide a method of determining whether a passenger is in a sitting position before entering a passenger moving system. Thus the invention advantageously provides an alternative solution for determining whether a passenger requires special assistance and whether the operation of the passenger moving system should be adjusted accordingly. A passenger in a sitting position preferably comprises a person in a chair with facilitated mobility, e.g., a wheelchair, or a child's pram; or a person in a mobility vehicle, e.g., a mobility scooter or an indoor airport taxi used to help transport the less-abled through an airport.

The inventive safety system, a passenger moving system comprising the inventive safety system and a method for detecting whether a passenger is in a sitting position, are the subject of the appended claims and are described in further detail in the following embodiments and figure description.

### Embodiments

The invention relates to:
A safety system for a passenger moving system according to claim 1.

When the passenger moving system is an escalator or a moving walk, preferably the system is located in any position from where the landing areas can be seen without any obstruction. It is preferably located such that it can recognize a passenger approaching from either landing area of the escalator or moving walk. The landing area preferably refers to the lower and upper landing areas which a passenger has to traverse before entering the escalator or moving walk, and when exiting the escalator or moving walk.

For example, it can be located:
- on a post erected therefor at the entrance of the escalator or moving walk;
- on a truss about the escalator or moving walk;
- hanging from the ceiling above the escalator or moving walk; preferably above the entrance to the escalator or moving walk; preferably above the exit of the escalator or moving walk; preferably above both the entrance and the exit of the escalator or moving walk.

When the passenger moving system is an elevator, the inventive system can be positioned inside an elevator cabin, or outside an elevator cabin. When positioned inside an elevator cabin, the system is preferably directed towards the elevator doors so as to monitor;
- passengers entering and exiting the elevator cabin when the cabin doors are in the process of opening or closing and when the doors are held in the open position for any period of time;
- passengers waiting in an area preferably in an area in close proximity to the elevator cabin doors.

When positioned outside an elevator cabin, the system is preferably located close to the elevator cabin doors so that the monitoring means can monitor the area in front of the cabin doors, as well as the area shared between the area in front of the cabin doors and the elevator cabin when the elevator cabin doors are opening or closing or held in the open position for any period of time.

The system preferably further comprises
- a control unit which is preferably adapted to respond to information transmitted to it via the monitoring means;
- a piece of hardware, preferably adapted to at least process, store and transmit information relating to captured images from the monitoring means. A piece of hardware includes any type of processing chip, e.g., a microprocessor;
- at least one connection point for connecting the system to an energy source, preferably for providing power to the system and/or for facilitating the capture of images.

The monitoring means preferably comprises a sensor wherein said sensor preferably comprises at least one of:
- a 3D sensor, e.g., a 3D camera;
- a time of flight (ToF) camera;
- a 360° camera;
- any combination of one or more of the above.

Preferably, the monitoring means is a sensor, wherein said sensor optionally comprises at least one energy source. Preferably, the monitoring means is an image sensor, wherein said image sensor optionally comprises at least one energy source.

The monitoring means, preferably the sensor, has a monitoring range of preferably 0.5 m to 8 m from where it is located, preferably it has a monitoring range of 2 m to 4 m from where it is located. In order to cover a greater distance, the system preferably comprises a monitoring device with a higher resolution sensor.

In an embodiment of the invention, the system is learning-based, i.e., it is adapted to first undergo a training phase in order to recognize
- a given environment, e.g., an area comprising the passenger moving system.;
- various bodily profiles of potential passengers, preferably in said given environment, before it can be set into operation mode.

A training phase, whilst it may be time consuming, advantageously provides the system, in particular the monitoring means, for example a 3D sensor, with a more defined identified environment and thus is able to more easily capture and identify the position of a passenger entering said identified environment. The hardware preferably transmits this information to the control unit which preferably triggers an event accordingly and consequently improves the passengers safety.

When a training phase is used, any image captured by the system is compared with data which has been accumulated and stored in a data bank during the training phase. The data bank can be a remote data bank, for example located in a cloud or a data bank comprised within the hardware of the monitoring device, or in an external piece of hardware, e.g., a computer hard-drive or a data storage device such as a USB memory stick.

In an embodiment of the invention, the system is algorithm based, i.e., it preferably operates via estimates obtained from one or more algorithms, wherein the one or more algorithms enable it to deduce from a captured image of a passenger a full bodily profile representation of said passenger, in particular a full skeletal representation. The one or more algorithms are preferably stored in the hardware comprised in the monitoring means. The hardware preferably transmits information to the control unit which preferably triggers an event accordingly and consequently improves the passengers safety.

Preferably the human skeleton and its form is already defined via the one or more algorithms. The use of one or more algorithms e.g., condensation algorithms in combination with other tools such as Kalman filtering, Bayesian networks and any other data collection tool advantageously allow for automatic monitoring and avoids the need for a training phase. Thus, the system can advantageously be set to operation mode immediately upon installation and the identification of a passenger having a particular bodily profile, e.g., sitting, is quick and reliable, which consequently improves the response time of the passenger moving system.

In an embodiment of the invention the body profile of the passenger comprises
- a standing position
- horizontal position;
- a sitting position, wherein the sitting position can be held by a passenger in a chair with facilitated mobility, e.g., a wheelchair, or a child's pram; or held by a passenger in a mobility vehicle, e.g., a mobility scooter or an indoor airport taxi used to help transport the less-abled through an airport;
- any position there-between.

This advantageously ensures that regardless of the way in which a passenger approaches a passenger moving system, the safety system will be able to deduce a corresponding body profile.

In an embodiment of the invention the safety system is activated to trigger an event upon detection of a passenger in a sitting position. The triggered event preferably varies according to the type of passenger moving system involved.

In an embodiment of the invention, the passenger moving system is an elevator. The triggered event is preferably any one or more selected from the group comprising:
- initiating a call for the elevator to the floor on which the passenger has been detected, thus removing the need for the passenger to use the call button;
- initiating a reduction in speed of the door closing operation of the doors, thus giving the passenger more time to make their way safely into the elevator cabin;
- activating a voice control command program which allows the passenger to control the elevator via their voice without having to maneuver themselves beside the control panel in the elevator cabin. This advantageously ensures that a passenger in a sitting position is suitably accommodated for when using an elevator.

In an embodiment of the invention, the passenger moving system is a moving walk or an escalator. The triggered event is preferably any one or more selected from the group comprising:
- activating an alarm signal, e.g., an audio or visual alarm signal;
- stopping the passenger moving system.

When the passenger moving system is a moving walk or an escalator, the triggered event preferably occurs in two-stages. When a passenger in a sitting position approaches the elevator and is detected in the area by the inventive system, wherein the area refers to the area through which the passenger must travel to reach and board the passenger moving system, an initial response is the triggering of the alarm signal. This can be for information purposes to inform the passenger of the risks associated if they proceed any further in the direction of the passenger moving system. In the event the passenger ignores this initial warning signal, a second response is triggered wherein the passenger moving system is stopped, thus preventing the passenger from using it to travel from a point A to a point B, thereby mitigating any potential safety risk.

In an embodiment of the invention, the safety system is adapted to measure an angle (θ) between one or more bones on the body of the passenger,
wherein the one or more bones on the body of the passenger connect at a joint, said joint preferably being rotatable about at least one axis (x, y, z),
wherein said joint is preferably at least one selected from the group comprising:
   - an ankle;
   - a knee;
   - a hip, including the pelvic area;
   - an elbow;
   - a neck;
   - a shoulder;
   - any combination thereof.

This advantageously allows for determining whether the passenger is in a sitting position or not.

In an embodiment of the invention, the measured angle (θ) is at least one selected from the group comprising:
- the angle between the foot and the lower leg (θ1), preferably comprising the ankle joint;
- the angle between the lower leg and the upper leg (θ2), preferably comprising the knee joint;
- the angle between the upper leg and the torso (θ3), preferably comprising the hip joint;
- the angle between the upper arm and the lower arm (θ4), preferably comprising the elbow joint;
- the angle between the torso and the head (θ5), preferably comprising the neck joint.

In an embodiment of the invention, the monitoring means is adapted to monitor the passenger in real time. This advantageously ensures that the response of the system reflects the most up-to-date information in relation to the passenger and preferably allows the system to trigger an event based on "live" information. This helps improve passenger safety.

In an embodiment of the invention, the monitoring means is adapted to monitor,
- the body profile of the passenger in real time; and/or
- any changes in the body profile of the passenger in real time.

This advantageously ensures that the response of the system reflects the most up-to-date information in relation to the passenger and preferably allows the system to trigger an event based on "live" information. This helps improve passenger safety.

In an embodiment of the invention, the passenger moving system comprises:
- an elevator;
- an escalator;
- a moving walk.

The invention also relates to:
A passenger moving system comprising a safety system according any of the preceding embodiments.

The invention also relates to:
A method of detecting whether a passenger of a passenger moving system is in a standing or a sitting position, comprising the method steps:
- positioning a safety system according to any of the preceding embodiments at a location where it can monitor an area comprising the passenger moving system, eg. the area through which the passenger has to travel in order to reach and enter the passenger moving system;
- monitoring the passenger as they travel through the area towards the passenger moving system;
- capturing at least one image of the passenger in particular the body profile of the passenger via a monitoring means;
- segmenting the at least one captured image of the body profile of the passenger into human and non-human regions;
- classifying and identifying the segmented regions, preferably using a shape classifier algorithm;
- implementing one or more data tools comprised within the system to match the identified regions of the body profile of the passenger with parts of the human skeleton;
- identifying and measuring at least one angle (θ1, θ2, θ3, θ4, θ5) between one or more bones on the body profile of the passenger, wherein the one or more bones on the body of the passenger connect at a joint, said joint preferably being rotatable about at least one axis (x, y, z);
- determining whether the at least one measured angle (θ1, θ2, θ3, θ4, θ5) corresponds to a body profile having a sitting or standing position;
- triggering an event if the at least one measured angle (θ1, θ2, θ3, θ4, θ5) corresponds to a body profile having a sitting position.

In an embodiment of the invention, the joint on the body of the passenger is at least one selected from the group comprising:
- an ankle;
- a knee;
- a hip, including the pelvic area;
- a neck;
- a shoulder
- an elbow;
- any combination thereof.

In an embodiment of the invention, the safety system monitors the area (W) in real time and responds to changes in the body profile of the passenger accordingly. This advantageously ensures that the response of the system reflects the most up-to-date information in relation to the passenger and thus improves passenger safety.

In an embodiment of the invention, the passenger moving system comprises
- an elevator;
- an escalator;
- a moving walk.

### Figure Description

The invention is described in more detail with the help of the figures:
Figs. 1a to 1c show a schematic representation of a passenger approaching a passenger moving system, wherein the passenger moving system is an elevator, an escalator and a moving walk respectively;
Figs. 2a and 2b show skeletal representations of a passenger in various standing and sitting positions;
Fig. 3 is a process step diagram showing how the inventive system triggers an event;
Fig. 4 shows the points of rotation comprised within the human body and their respective axes.

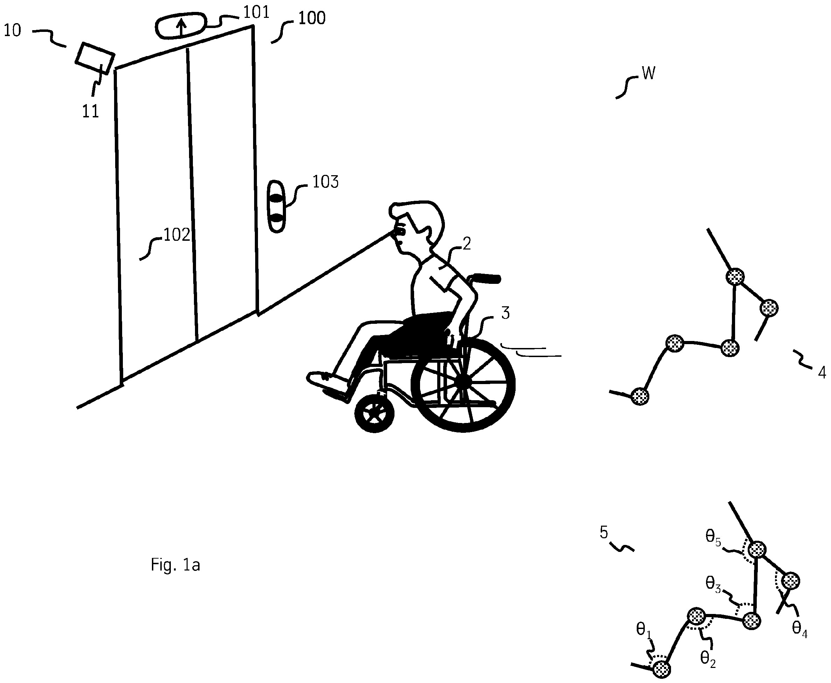

In fig. 1a, a schematic representation of an area W outside a passenger moving system is shown. In this particular example, the passenger moving system is an elevator 100. The elevator 100 comprises elevator doors 102, a hall lantern and floor designator 101, and a call button 103. The area comprises a system 10 according to the invention positioned above the elevator doors 102 such that it is directed towards prospective passengers. In the area W, a passenger 2 is approaching the elevator 100. The passenger 2 in this particular embodiment is a person sitting in a wheelchair 3.

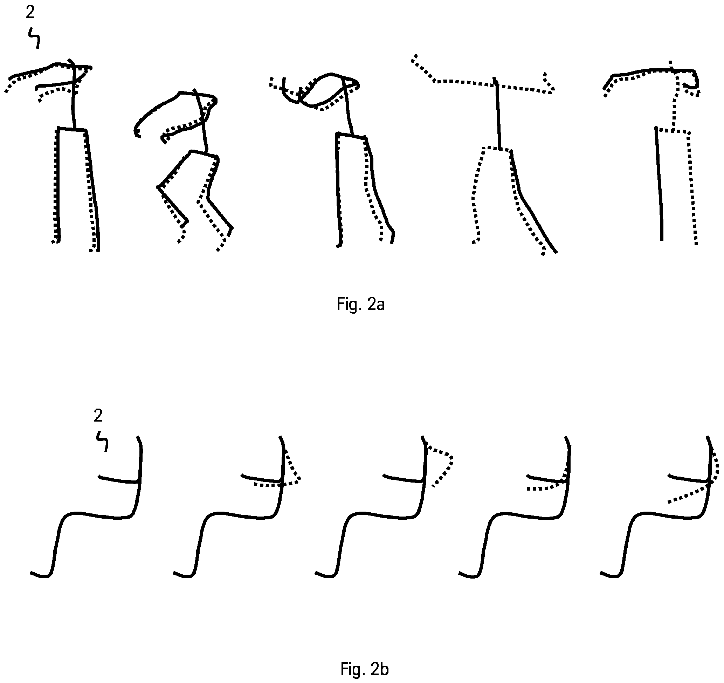

The selected monitoring means 11 of the system 10 in this particular example is a Time-of-Flight (ToF) camera 11. The ToF camera 11 monitors the area W in real-time. The system 10 is equipped with one or more algorithms which enable it to capture a full body representation 4 of the passenger 2, in particular a full skeletal representation of the passenger 2. The human skeleton and its form is already defined within the system 10 via the one or more algorithms. The system 10 is adapted to recognize a skeleton and its position and further distinguish between "human" and "non-human parts" of the captured body representation. The passenger 2 represents "human" parts whilst the wheelchair 3 in which they are sitting represents "non-human" parts. The one or more algorithms also enable the system 10 to recognize activities performed by the passenger 2, e.g., pushing the wheelchair 3 using their arms, see fig. 2b. Monitoring occurs in real-time therefore there is no need for a comparison of collected data, e.g., the captured image(s), with information stored in a data bank. Thus there is no delayed response time and the system 10 automatically triggers an event based on "live" information.

In fig. 1a wherein the passenger moving system is an elevator 100, the triggered event can be any one or more selected from the group comprising:
- initiating a call for the elevator 100 to the floor on which the passenger 2 has been detected, thus removing the need for the passenger 2 to use the call button 103;
- initiating a reduction in speed of the door closing operation of the doors 102, thus giving the passenger 2 more time to make their way safely into the elevator cabin;
- activating a voice control command program which allows the passenger 2 to control the elevator 100 via their voice without having to maneuver themselves beside the control panel inside the elevator cabin.

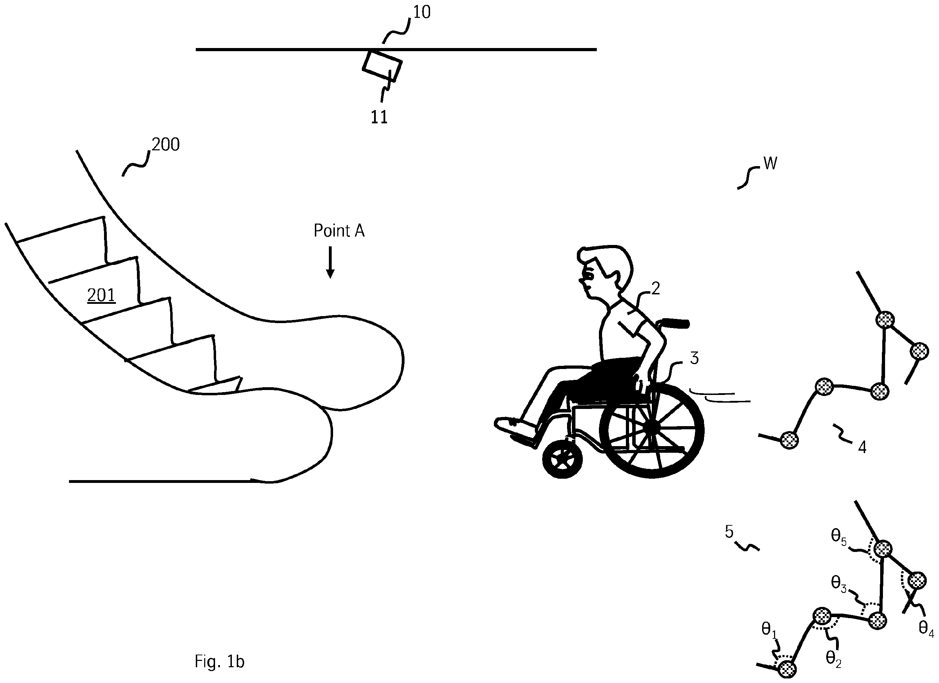

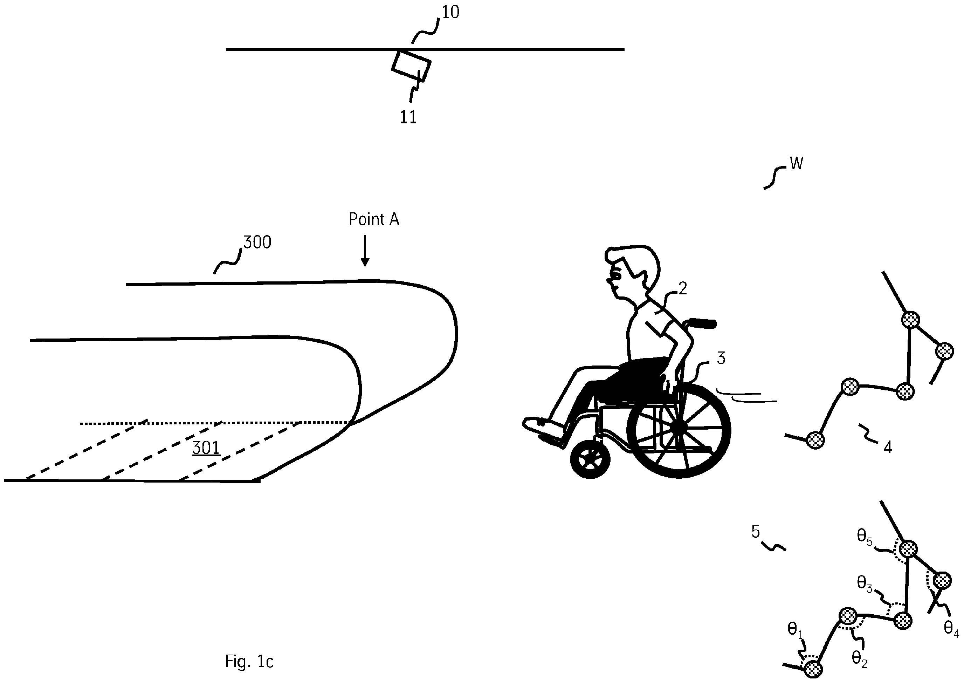

In fig. 1b or 1c wherein the passenger moving system is an escalator 200 comprising moving steps 201 and a moving walk 300 comprising moving pallets 301 respectively, the triggered event can be any one or more selected from the group comprising:
- activating an alarm signal, e.g., an audio or visual alarm signal;
- stopping the escalator 200 or the moving walk 300.

When the passenger moving system is an escalator 200 or a moving walk 300, the triggered event comprises two stages. When the passenger 2 in a sitting position approaches the escalator 200 or the moving walk 300 and is detected in the area W by the inventive system 10, an initial response is the triggering of an alarm signal. This can be for information purposes to inform the passenger 2 of the risks associated if they proceed any further in the direction of the escalator 200 or the moving walk 300. In the event the passenger 2 ignores this initial warning signal, a second response is triggered wherein the escalator 200 or the moving walk 300 is stopped, thus preventing the passenger 2 from using it to travel from a point A to a point B (not shown), thereby mitigating any potential safety risk.

Returning to fig. 1a, as the passenger 2 approaches the elevator doors 12, the system 10 identifies the passenger 2 and is able to construct a representation 4 of the passenger's 2 bodily profile. The system 10 recognizes the passenger 2, in particular the representation 4 thereof as being in a sitting position and activates the call button 103 to call the elevator cabin (not shown) to the floor on which the passenger 2 is present. The passenger 2 will notice the call has been made by the information showing up on the hall lantern and floor designator 101. Once the elevator cabin arrives, the cabin doors 102 open. As the passenger 2 approaches the cabin the system 10 activates a control on the cabin doors 102 so that their closing speed reduces and the closing time increases, preferably by 3 to 20 seconds. Once the passenger 2 is safely inside the elevator cabin, the system 10 further activates a voice control operation which allows the passenger to communicate orally the desired floor number with the elevator 100. The passenger 2 can be prompted to communicate orally with the elevator 100 by an initial computerized voice command from the elevator control panel comprised within the elevator cabin. As the passenger 2 disembarks from the elevator cabin, the control on the closing speed of the cabin doors 102 remains in place until the passenger 2 has completely exited the elevator cabin and travels in a direction away from the area W of that particular floor.

The system 10 is able to trigger an event and achieves the above by being adapted to reconstruct the 3D voxel for each captured image or frame taken by the ToF camera 11. The system 10 translates the reconstructed 3D voxel into a model skeletal representation, as shown in figs. 2a and 2b. Since the monitoring is carried out in real time, the movement of the potential elevator passenger 2 towards the elevator 100 is constantly tracked thus any change in movement is also depicted. The change in movement is shown as a dotted line about the original full line. Fig.2a shows a passenger 2 in various standing positions whilst fig. 2b shows a passenger 2 in a sitting position having various arm movements. The system is able to distinguish between the bodily form when sitting and the bodily form when standing and respond appropriately when the bodily form is in the sitting position.

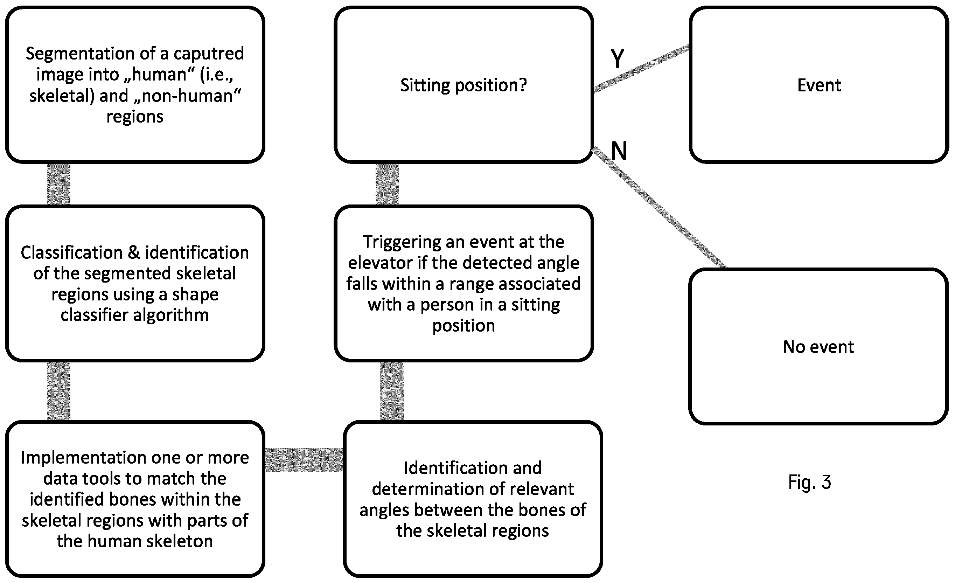

The process for detecting a human pose or bodily profile in order to reconstruct the corresponding 3D voxel is shown in fig. 3 and comprises the following process steps:
- segmentation of the captured image or images into "human" regions and "non-human" regions wherein the "human" regions comprise the human skeleton of the passenger 2 and the "non-human" regions comprise the moving object, e.g., the wheelchair 3;
- classification and identification of the segmented regions using a shape classifier algorithm in order to precisely extract the regions of the skeleton of the passenger 2, from the rest of the moving wheelchair 3;

- implementation of one or more data detection tools e.g., a Kalman filter, a Bayesian network, a condensation algorithm or any other suitable data detection tool to match the identified bones with parts of the human skeleton, e.g., bones corresponding to arms, bones corresponding to legs, bones corresponding to a spine, bones corresponding to a skull or head, in order to generate a stick figure representation of the passenger 2;
- identification and determination of relevant angles (θ) between the bones of the skeleton, e.g., the angle between the femur and the pelvis i.e., the thigh bone and the hip bone; or the angle between the femur and the tibia or fibula or both tibia and fibula, i.e., thigh bone and the bones in the lower leg.

The passenger 2 in the wheelchair 3 comprises
- an angle θ2 between the femur and the tibia or fibula or both tibia and fibula i.e., thigh bone and the bones in the lower leg wherein said angle θ2 comprises the knee joint;
- an angle θ3 between the femur and the spine i.e., the thigh bone and the torso wherein said angle θ3comprises the hip joint (see reference number 5 of figs. 1a to 1c).

Each respective angle θ2, θ3 falls within the range corresponding to a person in a sitting position. In the event the passenger has one or more limbs missing, the system can make correlations with angles from other parts of the skeletal representation, e.g., arms, in order to detect whether the passenger 2 is in a sitting positon or not.

If the angle θ between the femur and the tibia or fibula or both tibia and fibula i.e., thigh bone and the bones in the lower leg wherein said angle comprises the knee joint, is within the range of 70° to 150°, the device 10 recognizes this image as a passenger in a sitting position.

If the angle between the femur and the tibia or fibula or both tibia and fibula i.e., thigh bone and the bones in the lower leg wherein said angle comprises the knee joint is greater than 150°, the device 10 recognizes this image as a passenger in a standing position.

If the angle between the femur and the spine, i.e., the thigh bone and the torso wherein said angle comprises the hip joint, is in the range from 120° to 220°, the device recognizes this image as a passenger in a standing position. If the angle between the femur and the spine i.e., the thigh bone and the torso wherein said angle comprises the hip joint, is less than 120°, the device recognizes this image as a passenger in a sitting position.

The process for detecting a human pose or body profile in order to reconstruct the corresponding 3D voxel when the system 10 is learning-based comprises the same process steps as outlined above. The inventive system 10 uses same processes as previously outlined i.e., algorithm based and learning based, when the passenger moving system is an escalator 200 (fig 1b) or when the passenger moving system is a moving walk 300 (fig 1c).

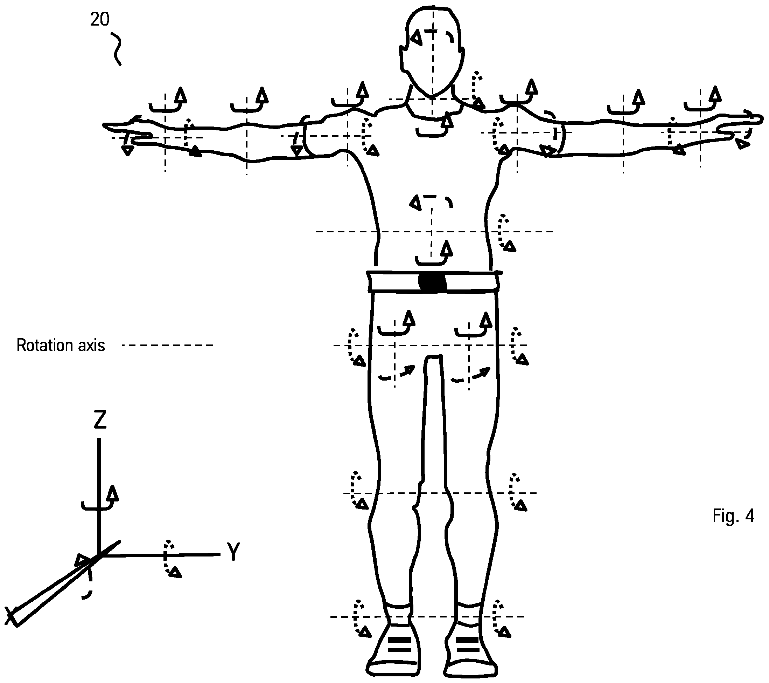

Fig.4 shows the various points of rotation within the human body 20 that the system 10 is adapted to detect and use in determining whether a person is in a sitting or standing position. A plurality of algorithms can be introduced to the system 10 to take into account the numerous combinations of bodily rotations about the x-, y-, and z-axes at one or more points of rotation. Such rotations are reflected in the skeletal representation which the system 10 detects and uses to trigger an event if appropriate.

### Reference signs list

- 2: passenger
- 3: wheelchair
- 4: representation of a bodily profile
- 5: angles

- 10: system
- 11: monitoring means

- 20: human body

- 100: elevator
- 101: hall lantern and floor designator
- 102: elevator doors
- 103: call button

- 200: escalator
- 201: moving steps

- 300: moving walk
- 301: moving pallets

- θ: joint angle
- W: area

## Claims

1. A safety system (10) for a passenger moving system (100, 200, 300) comprising a monitoring means (11),
wherein the safety system (10)is adapted to identify a body profile of a passenger (2)
**characterized in that**
the safety system (10) is adapted to measure an angle (θ) between one or more bones on the body of the passenger (2),
wherein the one or more bones on the body of the passenger (2) connect at a joint, said joint being rotatable about at least one axis (x, y, z) and that the body profile of the passenger (2) comprises
- a standing position;
- a sitting position;
- any position there-between.

2. The safety system (10) according to claim 1 **characterized in that** the measured angle (θ) is at least one selected from the group comprising:
- the angle between the foot and the lower leg (θ1);
- the angle between the lower leg and the upper leg (θ2);
- the angle between the upper leg and the torso (θ3);
- the angle between the upper arm and the lower arm (θ4);
- the angle between the torso and the head (θ5).

3. The safety system (10) according to any of the preceding claims, **characterized in that** the monitoring means (11) is adapted to monitor the passenger (2) in real time.

4. The safety system (10) according to any of the preceding claims, **characterized in that** the monitoring means (11) is adapted to monitor:
- the body profile of the passenger (2); and/or
- any changes in the body profile of the passenger (2) in real time.

5. The safety system (10) according to any of the preceding claims, **characterized in that** the monitoring means (11) comprises a sensor wherein said sensor preferably comprises at least one of:
- a 3D sensor;
- a time of flight camera;
- a 360° camera;
- any combination of one or more of the above.

6. The safety system (10) according to any of the preceding claims,
**characterized in,**
**that** the passenger moving system comprises:
- an elevator (100);
- an escalator (200);
- a moving walk (300).

7. A passenger moving system (100, 200, 300) comprising a safety system (10) according to any of the preceding claims.

8. A method of detecting whether a passenger (2) of a passenger moving system (100, 200, 300) is in a standing or a sitting position, comprising the method steps:
- positioning a safety system (10) according to any of the claims 1 to 6 at a location where it is able to monitor an area (W) comprising the passenger moving system (100, 200, 300);
- capturing at least one image of the passenger (2) in particular the body profile of the passenger (2) via a monitoring means (11);
- segmenting the at least one captured image of the body profile of the passenger (2) into human and non-human regions;
- implementing one or more data tools comprised within the system (10) to match the identified regions of the body profile of the passenger (2) with parts of the human skeleton;
- identifying and measuring at least one angle (θ1, θ2, θ3, θ4, θ5) between one or more bones on the body profile of the passenger (2) wherein the one or more bones connect at a joint;
- determining whether the at least one measured angle (θ1, θ2, θ3, θ4, θ5) corresponds to a body profile having a sitting or standing position;
- triggering an event if the at least one measured angle (θ1, θ2, θ3, θ4, θ5) corresponds to a body profile having a sitting position.

9. Method according to claim 8 **characterized in that** the joint on the body of the passenger (2) is at least one selected from the group comprising:
- an ankle;
- a knee;
- a hip;
- a neck;
- any combination thereof.

10. Method according to any of claims 8 to 9 **characterized in that** the safety system (10) monitors the area (W) in real time and responds to changes in the body profile of the passenger (2) accordingly.

11. Method according to any of claims 8 to 10 **characterized in that** the passenger moving system comprises
- an elevator (100);
- an escalator (200);
- a moving walk (300).

## Patentansprüche

1. Sicherheitssystem (10) für ein Personenbeförderungssystem (100, 200, 300), das eine Überwachungseinrichtung (11) aufweist,
wobei das Sicherheitssystem (10) dazu eingerichtet ist, ein Körperprofil eines Fahrgastes (2) zu identifizieren,
**dadurch gekennzeichnet, dass**
das Sicherheitssystem (10) dazu eingerichtet ist, einen Winkel (θ) zwischen einem oder mehreren Knochen am Körper des Fahrgastes (2) zu messen,
wobei der eine oder die mehreren Knochen am Körper des Fahrgastes (2) mit einem Gelenk verbunden sind, wobei das Gelenk um mindestens eine Achse (x, y, z) drehbar ist, und
das Körperprofil des Fahrgastes (2) aufweist:
- eine stehende Position;
- eine sitzende Position;
- eine beliebige Position dazwischen.

2. Sicherheitssystem (10) nach Anspruch 1, **dadurch gekennzeichnet, dass** der gemessene Winkel (θ) mindestens ein Winkel ist, der ausgewählt ist aus der Gruppe umfassend:
- den Winkel zwischen dem Fuß und dem Unterschenkel (θ1);
- den Winkel zwischen dem Unterschenkel und dem Oberschenkel (θ2);
- den Winkel zwischen dem Oberschenkel und dem Rumpf (θ3);
- den Winkel zwischen dem Oberarm und dem Unterarm (θ4); und
- den Winkel zwischen dem Rumpf und dem Kopf (θ5).

3. Sicherheitssystem (10) nach einem der vorhergehenden Ansprüche, **dadurch gekennzeichnet, dass** die Überwachungseinrichtung (11) dazu eingerichtet ist, den Fahrgast (2) in Echtzeit zu überwachen.

4. Sicherheitssystem (10) nach einem der vorhergehenden Ansprüche, **dadurch gekennzeichnet, dass** die Überwachungseinrichtung (11) dazu eingerichtet ist,
- das Körperprofil des Fahrgastes (2); und/oder
- jegliche Änderungen des Körperprofils des Fahrgastes (2) in Echtzeit zu überwachen.

5. Sicherheitssystem (10) nach einem der vorhergehenden Ansprüche, **dadurch gekennzeichnet, dass** die Überwachungseinrichtung (11) einen Sensor aufweist, wobei der Sensor vorzugsweise mindestens eine der folgenden Komponenten aufweist:
- einen 3D-Sensor;
- eine Time-of-Flight-Kamera;
- eine 360°-Kamera;
- eine beliebige Kombination aus einem oder mehreren der vorstehenden Komponenten.

6. Sicherheitssystem (10) nach einem der vorhergehenden Ansprüche,
**dadurch gekennzeichnet, dass**
das Personenbeförderungssystem aufweist:
- einen Aufzug (100);
- eine Rolltreppe (200);
- einen Fahrsteig (300).

7. Personenbeförderungssystem (100, 200, 300) mit einem Sicherheitssystem (10) nach einem der vorhergehenden Ansprüche.

8. Verfahren zum Erfassen, ob sich ein Fahrgast (2) eines Personenbeförderungssystems (100, 200, 300) in einer stehenden oder in einer sitzenden Position befindet, mit den Verfahrensschritten:
- Positionieren eines Sicherheitssystems (10) nach einem der Ansprüche 1 bis 6 an einem Ort, an dem es in der Lage ist, einen Bereich (W) zu überwachen, der das Personenbeförderungssystem (100, 200, 300) enthält;
- Aufnehmen mindestens eines Bildes des Fahrgastes (2), insbesondere des Körperprofils des Fahrgastes (2), durch eine Überwachungseinrichtung (11);
- Segmentieren des mindestens einen aufgenommenen Bildes des Körperprofils des Fahrgastes (2) in menschliche und nicht-menschliche Bereiche;
- Implementieren eines oder mehrerer im System (10) enthaltener Datenwerkzeuge, um die identifizierten Bereiche des Körperprofils des Fahrgastes (2) mit Teilen des menschlichen Skeletts abzugleichen;
- Identifizieren und Messen mindestens eines Winkels (θ1, θ2, θ3, θ4, θ5) zwischen einem oder mehreren Knochen des Körperprofils des Fahrgastes (2), wobei der eine oder die mehreren Knochen mit einem Gelenk verbunden sind;
- Bestimmen, ob der mindestens eine gemessene Winkel (θ1, θ2, θ3, θ4, θ5) einem Körperprofil mit einer sitzenden oder einer stehenden Position entspricht;
- Auslösen eines Ereignisses, wenn der mindestens eine gemessene Winkel (θ1, θ2, θ3, θ4, θ5) einem Körperprofil einer sitzenden Position entspricht.

9. Verfahren nach Anspruch 8, **dadurch gekennzeichnet, dass** das Gelenk am Körper des Fahrgastes (2) mindestens ein Gelenk ist, das ausgewählt ist aus der Gruppe umfassend:
- einen Knöchel;
- ein Knie;
- eine Hüfte;
- einen Hals; und
- eine beliebige Kombination davon.

10. Verfahren nach Anspruch 8 oder 9, **dadurch gekennzeichnet, dass** das Sicherheitssystem (10) den Bereich (W) in Echtzeit überwacht und auf Änderungen des Körperprofils des Fahrgastes (2) entsprechend anspricht.

11. Verfahren nach einem der Ansprüche 8 bis 10, **dadurch gekennzeichnet, dass** das Personenbeförderungssystem aufweist:
- einen Aufzug (100);
- eine Rolltreppe (200);
- einen Fahrsteig (300).

## Revendications

1. Système de sécurité (10) pour un système de déplacement de passagers (100, 200, 300) comprenant un moyen de surveillance (11),
où le système de sécurité (10) est adapté pour identifier un profil du corps d'un passager (2)
**caractérisé en ce que** le système de sécurité (10) est adapté pour mesurer un angle (θ) entre un ou plusieurs os sur le corps du passager (2),
dans lequel le ou les os sur le corps du passager (2) sont reliés à une articulation, ladite articulation étant rotative autour d'au moins un axe (x, y, z) et que le profil du corps du passager (2) comprend
- une position debout ;
- une position assise ;
- une position quelconque entre les deux.

2. Système de sécurité (10) selon la revendication 1, **caractérisé en ce que** l'angle (θ) mesuré est au moins un angle choisi dans le groupe comprenant :
- l'angle entre le pied et la jambe inférieure (θ1) ;
- l'angle entre la jambe inférieure et la jambe supérieure (θ2) ;
- l'angle entre la jambe supérieure et le torse (θ3) ;
- l'angle entre le bras et l'avant-bras (θ4) ;
- l'angle entre le torse et la tête (θ5).

3. Système de sécurité (10) selon l'une quelconque des revendications précédentes, **caractérisé en ce que** le moyen de surveillance (11) est adapté pour surveiller le passager (2) en temps réel.

4. Système de sécurité (10) selon l'une quelconque des revendications précédentes, **caractérisé en ce que** le moyen de surveillance (11) est adapté pour surveiller :
- le profil du corps du passager (2) ; et/ou
- toute modification dans le profil du passager (2)
en temps réel.

5. Système de sécurité (10) selon l'une quelconque des revendications précédentes, **caractérisé en ce que** le moyen de surveillance (11) comprend un capteur, dans lequel ledit capteur comprend de préférence au moins un capteur parmi :
- un capteur 3D ;
- une caméra temps de vol ;
- une caméra 360 ° ;
- une combinaison quelconque d'un ou de plusieurs parmi les capteurs ci-dessus.

6. Système de sécurité (10) selon l'une quelconque des revendications précédentes,
**caractérisé en ce**
**que** le système de déplacement de passager comprend :
- un ascenseur (100) ;
- un escalier mécanique (200) ;
- un tapis roulant (300).

7. Système de déplacement de passager (100, 200, 300) comprenant un système de sécurité (10) selon l'une quelconque des revendications précédentes.

8. Procédé de détection si un passager (2) d'un système de déplacement de passagers (100, 200, 300) est dans une position debout ou assise, comprenant les étapes de procédé :
- le positionnement d'un système de sécurité (10) selon l'une quelconque des revendications 1 à 6 à un emplacement où il sera capable de surveiller une zone (W) comprenant le système de déplacement de passagers (100, 200, 300) ;
- la détection d'au moins une image du passager (2), en particulier le profil du corps du passager (2) par le biais du moyen de surveillance (11) ;
- la segmentation de l'au moins une image détectée du profil du corps du passager (2) en régions humaines et non humaines ;
- la mise en oeuvre d'un ou de plusieurs outils de données compris dans le système (10) pour faire correspondre les régions identifiées du profil du corps du passager (2) avec des parties du squelette humain ;
- l'identification et la mesure d'au moins un angle (θ1, θ2, θ3, θ4, θ5) entre un ou plusieurs os sur le profil du corps du passager (2), où l'os ou les os se relient à une articulation ;
- la détermination si l'au moins un angle mesuré (θ1, θ2, θ3, θ4, θ5) correspond à un profil de corps ayant une position assise ou debout ;
- le déclenchement d'un évènement si au moins un angle mesuré (θ1, θ2, θ3, θ4, θ5) correspond à un profil de corps ayant une position assise.

9. Procédé selon la revendication 8, **caractérisé en ce que** l'articulation sur le corps du passager (2) est au moins une articulation choisie dans le groupe comprenant :
- un coude ;
- un genou ;
- une hanche ;
- un cou ;
- une combinaison quelconque de ceux-ci.

10. Procédé selon l'une quelconque des revendications 8 à 9, **caractérisé en ce que** le système de sécurité (10) surveille la zone (W) en temps réel et répond à des modifications dans le profil du corps du passager (2) de manière adéquate.

11. Procédé selon l'une quelconque des revendications 8 à 10, **caractérisé en ce que** le système de déplacement de passager comprend
- un ascenseur (100) ;
- un escalier mécanique (200) ;
- un tapis roulant (300).
